(19)

Europäisches
Patentamt
European
Patent Office
Office européen
des brevets

(11) **EP 1 775 710 A1**

(12) **EUROPEAN PATENT APPLICATION**
published in accordance with Art. 158(3) EPC

(43) Date of publication:
**18.04.2007 Bulletin 2007/16**

(21) Application number: **05741620.8**

(22) Date of filing: **20.05.2005**

(51) Int Cl.:
**G09G 3/36** (2006.01)    **G02F 1/133** (2006.01)
**G09G 3/20** (2006.01)    **G09G 3/34** (2006.01)

(86) International application number:
**PCT/JP2005/009254**

(87) International publication number:
**WO 2006/013667 (09.02.2006 Gazette 2006/06)**

(84) Designated Contracting States:
**DE FI GB NL**

(30) Priority: **05.08.2004 JP 2004229909**

(71) Applicant: **KABUSHIKI KAISHA TOYOTA
JIDOSHOKKI
Kariya-shi, Aichi 448-8671 (JP)**

(72) Inventors:
• **ITO, Takayuki,
K. K. TOYOTA JIDOSHOKKI
Kariya-shi,
Aichi 4488671 (JP)**
• **KAWAUCHI, Hiroyasu,
K. K. TOYOTA JIDOSHOKKI
Kariya-shi,
Aichi 4488671 (JP)**
• **TAKEUCHI, Norihito,
K. K. TOYOTA JIDOSHOKKI
Kariya-shi,
Aichi 4488671 (JP)**
• **HARADA, Masayuki,
K. K. TOYOTA JIDOSHOKKI
Kariya-shi,
Aichi 4488671 (JP)**

• **MIURA, Hiroyuki,
K. K. TOYOTA JIDOSHOKKI
Kariya-shi,
Aichi 4488671 (JP)**
• **ISHIKAWA, Haruyuki,
K. K. TOYOTA JIDOSHOKKI
Kariya-shi,
Aichi 4488671 (JP)**
• **TOEDA, Minoru,
K. K. TOYOTA JIDOSHOKKI
Kariya-shi,
Aichi 4488671 (JP)**
• **YOSHIDA, Mikio,
K. K. TOYOTA JIDOSHOKKI
Kariya-shi,
Aichi 4488671 (JP)**
• **BESSHI, Noriyuk,
K. K. TOYOTA JIDOSHOKKI
Kariya-shi,
Aichi 4488671 (JP)**
• **KOIKE, Shuji,
K. K. TOYOTA JIDOSHOKKI
Kariya-shi,
Aichi 4488671 (JP)**

(74) Representative: **TBK-Patent
Bavariaring 4-6
80336 München (DE)**

(54) **LIQUID CRYSTAL DISPLAY DEVICE**

(57)    A liquid crystal display device includes a liquid crystal panel and an illumination unit. The illumination unit has a planar light emitting region formed by an EL element. The light emitting region is formed by a plurality of linear light emitting regions that extend in a direction perpendicular to the vertical scanning direction of liquid crystal. The linear light emitting regions are switched between a light emitting state and a non-light emitting state based on a command signal from a controller in a manner that the linear light emitting regions sequentially emit light in synchronization with vertical scanning of the liquid crystal. Each linear light emitting region is controlled to be in the non-light emitting state at least during a drive data rewriting period of a portion of the liquid crystal immediately above the linear light emitting region.

EP 1 775 710 A1

# Fig.4

**Description**

TECHNICAL FIELD

The present invention relates to a liquid crystal display (LCD) device that uses as a backlight an illumination unit having a planar light emitting region that is formed by an EL (electroluminescence) element.

BACKGROUND ART

LCD devices are widely used as display devices for computers, portable devices, etc. In recent years, such display devices display not only still images but also moving images. However, when an LCD device displays a moving image, its image quality is low as compared with a CRT (cathode ray tube), or more specifically, residual images occur and movements are blurred. One cause for this may be as follows. Liquid crystal requires a long time to change its arrangement (orientation) between a state that permits transmission of light (a transmission state) and a state that blocks transmission of light (a non-transmission state). When a backlight is continuously illuminated, the arrangement change of the liquid crystal is delayed in a portion of the liquid crystal that is driven into the non-transmission state, and such delay causes residual images.

A display device including a scanning-type backlight that performs scanning in a direction perpendicular to a liquid crystal scanning direction with a linear light having a particular width has been proposed as an LCD device that improves the image quality of a moving image (refer, for example, to Patent Document 1). This publication proposes a structure for a scanning-type backlight in which light emitted from a fluorescent tube is converged onto a lens using a light collecting tube, the light collimated through the lens is directed to a reflection plate, and the light reflected is projected onto a polarizing plate of a liquid crystal panel. The publication also proposes another structure for a scanning-type backlight including a light unit for reflecting light emitted from a fluorescent tube in a planar manner in correspondence with the entire surface of a liquid crystal panel using a reflection plate or the like, a scanning plate formed by a second liquid crystal panel that is arranged between the light unit and the liquid crystal panel, and a selective reflection plate and polarizing plate arranged between the scanning plate and the liquid crystal panel.

The display device proposed in the publication performs scanning in the direction perpendicular to the liquid crystal scanning direction using linear light and controls pixels to be in a transmission state or in a non-transmission state in synchronization with the scanning using linear light. Thus, this display device improves the image quality of a moving image as compared with the structure in which the entire liquid crystal panel is constantly illuminated with light from a backlight. However, the backlight with the former structure proposed in the publication uses the fluorescent tube as a light source and moves the linear light in the scanning direction by rotating the light collecting tube on which slits are formed. This structure increases the thickness and weight of the entire backlight, and needs a mechanical drive unit that complicates the mechanism of the backlight. The backlight with the latter structure proposed in the publication uses the fluorescent tube as a light source, and scans the second liquid crystal panel using linear light. This structure eliminates the need for a mechanical drive unit but increases the thickness and the weight of the entire backlight.

Further, the publication discloses a backlight that is presumably applicable to a passive type (simple matrix type) liquid crystal panel but is not applicable to an active type liquid crystal panel. Although the liquid crystal in the active type liquid crystal panel is actually driven in a period in which image data of each pixel is being rewritten, the active type liquid crystal panel is configured so that it does not show the liquid crystal being driven in that period. If, for example, the liquid crystal panel is illuminated with linear light during the image data rewriting period of the pixels, light would be transmitted through pixels that need to be in the non-transmission state. This would lower the image quality.

Patent Document 1: Japanese Laid-Open Patent Publication No. 2002-6766

DISCLOSURE OF THE INVENTION

PROBLEMS TO BE SOLVED BY THE INVENTION

It is an object of the present invention to provide a liquid crystal display device for improving image quality by reducing residual images that occur when displaying a moving image.

MEANS OF SOLVING THE PROBLEMS

To achieve the above object, the present invention provides a liquid crystal display device using an illumination unit including a planar light emitting region formed by an EL element as a backlight. The planar light emitting region is formed by a plurality of linear light emitting regions extending in a direction perpendicular to a vertical scanning direction of liquid crystal. The plurality of linear light emitting regions are controlled to switch between a light emitting state and a non-light emitting state by a command signal from a controller in a manner that the plurality of linear light emitting regions sequentially emit light in synchronization with vertical scanning of the liquid crystal. The linear light emitting regions are controlled to be in the non-light emitting state at least during a drive data rewriting period of a portion of the liquid crystal that is immediately above the linear light emitting region.

It is preferred that when one of the linear light emitting regions is switched from the light emitting state to the non-light emitting state, the one linear light emitting region is switched to the non-light emitting state after another one of the linear light emitting regions is switched to the light emitting state in place of the one linear light emitting region that is switched to the non-light emitting state.

It is preferred that the EL element has a light emitting layer and a first electrode and second electrodes that are arranged to sandwich the light emitting layer, the first electrode has a greater volume resistivity than the second electrodes and is formed by a sheet electrode shared by all the linear light emitting regions, and the second electrodes are formed to have shapes respectively corresponding to the linear light emitting regions.

In a preferred example, the first electrode has a terminal unit on at least one end of the first electrode in the vertical scanning direction of the liquid crystal, and the controller controls the second electrodes in a manner that the second electrodes have a smaller on-duty when located closer to the terminal unit.

In a preferred example, the terminal unit is arranged on one or two ends of the first electrode.

It is preferred that each second electrode is pulse width modulation light controlled during an on-period of the second electrode within one frame based on a command from the controller.

It is preferred that the EL element has a light emitting layer and first electrodes and a second electrode that are arranged to sandwich the light emitting layer, the second electrode has a smaller volume resistivity than the first electrodes and is formed by a sheet electrode shared by all the linear light emitting regions, and the first electrodes are formed to have shapes respectively corresponding to the linear light emitting regions.

A preferred example further includes a liquid crystal panel arranged to face the illumination unit. The first electrode is transparent and arranged closer to the liquid crystal panel than the second electrode.

It is preferred that the EL element is an organic EL element including a light emitting layer that is formed by a thin film of an organic EL material.

In a preferred example, the organic EL element is switched from a state in which a voltage lower than the voltage necessary for light emission is applied to the organic EL element to a state in which the voltage necessary for light emission is applied to the organic EL element when the organic EL element is controlled to switch from the non-light emitting state to the light emitting state.

In a preferred example, a voltage higher than the voltage necessary for light emission or a current higher than the current necessary for light emission is applied to the organic EL element when the organic EL element is controlled to switch from the non-light emitting state to the light emitting state.

It is preferred that a reverse bias voltage is applied to the organic EL element in the non-light emitting state.

It is preferred that the organic EL element emits white light, and the liquid crystal panel includes a color filter.

It is preferred that each linear light emitting region is formed to have a width that enables a plurality of lines of pixel electrodes that are sequentially scanned linearly to be simultaneously illuminated.

It is preferred that the linear light emitting regions be controlled in a manner that a plurality of light emitting regions are set in the light emitting state simultaneously in a normal state.

It is preferred that when a single frame time of the liquid crystal display device is represented by Tf, a response time of the liquid crystal is represented by Tr, the number of lines of the linear light emitting regions is represented by N, and the number of lines of the linear light emitting regions that are illuminated simultaneously is represented by n, the values of Tf, Tr, N, and n satisfy the expression:

$$\{(Tf/N)+Tr\}+(Tf/N)*n \leq Tf.$$

BRIEF DESCRIPTION OF THE DRAWINGS

Fig. 1(a) is a schematic view of an LCD device according to the present invention, Fig. 1(b) is a schematic partial cross-sectional view of a liquid crystal panel, and Fig. 1(c) is a schematic partial cross-sectional view of the liquid crystal panel and an illumination unit;

Fig. 2 is a schematic view showing the positional relationship between a transparent electrode and opposing electrodes;

Fig. 3 is a schematic view showing the structure of a drive circuit;

Fig. 4 is a diagram showing timings at which each linear light emitting region is switched between a light emitting state and a non-light emitting state;

Fig. 5 is a time chart showing the relationship between the data writing period of pixel electrodes and the on-duty of the opposing electrodes;

Fig. 6 is a schematic view showing the arrangement of transparent electrodes in another embodiment of the present invention;

Fig. 7 is a schematic partial cross-sectional view showing an illumination unit in the other embodiment;

Fig. 8 is a schematic view of an illumination unit according to another embodiment of the present invention;

Fig. 9 is a diagram describing conditions for setting the number of lines of linear light emitting regions that are illuminated simultaneously in the other embodiment;

Fig. 10 is a time chart showing the relationship between the response time of liquid crystal and the voltage applied to an organic EL element in another embodiment of the present invention;

Fig. 11 is a time chart showing the relationship between the response time of liquid crystal and the voltage applied to an organic EL element in another embodiment of the present invention;

Fig. 12 is a diagram showing a drive circuit of an organic EL element in another embodiment of the present invention;

Fig. 13 is a graph showing the waveform of the voltage applied to the organic EL element in the other embodiment;

Fig. 14 is a diagram showing a drive circuit of an organic EL element in another embodiment of the present invention;

Fig. 15 is a graph showing the waveform of the voltage applied to the organic EL element in the other embodiment;

Figs. 16(a) and 16(b) are partial schematic views showing an illumination unit according to another embodiment of the present invention;

Figs. 17(a) and 17(b) are partial schematic views showing an illumination unit according to another embodiment of the present invention;

Fig. 18 is a schematic view showing an illumination unit and a light emitting device according to another embodiment of the present invention;

Fig. 19 is a schematic view showing PWM light control according to another embodiment of the present invention;

Fig. 20 is a schematic view showing the arrangement of linear light emitting regions according to another embodiment of the present invention; and

Figs. 21(a) and 21(b) are schematic partial cross-sectional views showing an illumination unit according to another embodiment of the present invention.

BEST MODE FOR CARRYING OUT THE INVENTION

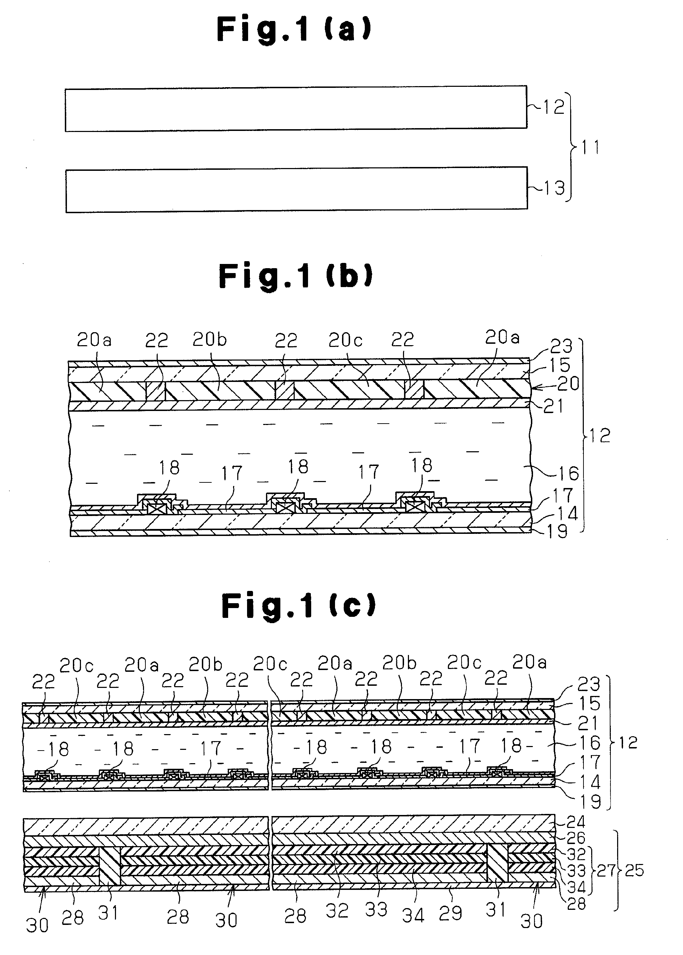

A preferred embodiment of the present invention will now be described with reference to Figs. 1 to 5.

As shown in Fig. 1(a), a liquid crystal display (LCD) device 11 performs full-color display, and includes a transmissive liquid crystal panel 12 and an illumination unit 13 functioning as a backlight arranged on a back surface (surface opposite to its display surface) side of the liquid crystal panel 12.

The liquid crystal panel 12 has basically the same structure as a known active matrix type liquid crystal panel for full-color display.

As shown in Fig. 1(b), the liquid crystal panel 12 includes a pair of transparent first and second substrates 14 and 15, which are bonded together by a sealant (not shown) with a predetermined interval maintained between the substrates 14 and 15. Liquid crystal 16 is enclosed between the substrates 14 and 15. The substrates 14 and 15 are made, for example, of glass. Many pixel electrodes 17, each of which forms a sub-pixel, and many thin-film transistors (TFTs) 18, which are respectively connected to the pixel electrodes 17, are formed on a surface of the first substrate 14 arranged at the side of the illumination unit 13 facing the liquid crystal 16. The pixel electrodes 17 are made of ITO (indium tin oxide). Three pixel electrodes 17 form one pixel. A polarizing plate 19 is arranged on a surface of the first substrate 14 opposite to the liquid crystal 16.

A color filter 20 is formed on a surface of the second substrate 15 facing the liquid crystal 16, and a transparent electrode 21 shared by all the pixels is formed on the color filter 20. The transparent electrode 21 is also made of ITO. The color filter 20 has regions 20a, 20b, and 20c that transmit red, green, and blue light, respectively. Each of the regions 20a, 20b, and 20c corresponds to one pixel electrode 17. Two adjacent regions 20a to 20c are partitioned by a black matrix 22. A polarizing plate 23 is formed on a surface of the second substrate 15 opposite to the liquid crystal 16.

The illumination unit 13 has a planar light emitting region that is formed by an EL (electroluminescence) element. More specifically, the LCD device 11 uses, as a backlight, the illumination unit 13 having the planar light emitting region that is formed by the EL element. As shown in Fig. 1(c), the illumination unit 13 includes an organic EL element 25, which serves as an EL element, formed on a transparent substrate 24. The organic EL element 25 is formed by laminating a transparent electrode 26 functioning as a first electrode, a plurality of organic layers 27 functioning as a light emitting layer, and a plurality of opposing electrodes 28 functioning as a second electrode from the side of the substrate 24. The organic EL element 25 is coated by a protective film 29 to prevent adverse effects caused by moisture (water vapor) and oxygen.

In the present embodiment, a transparent glass substrate is used as the substrate 24. Further, the transparent electrode 26 forms an anode and the opposing electrodes 28 form a negative electrode. The transparent electrode 26 is made of ITO (indium tin oxide) used as a material for a transparent electrode in an organic EL element known in the art, and transmits light. The opposing electrodes 28 are made of metal, such as aluminum, and function to reflect light. The organic EL element 25 is configured to be of a bottom emission type in which light from the organic layers 27 is output (emitted) from the side of the substrate 24. The protective film 29 is made of, for example, silicon nitride.

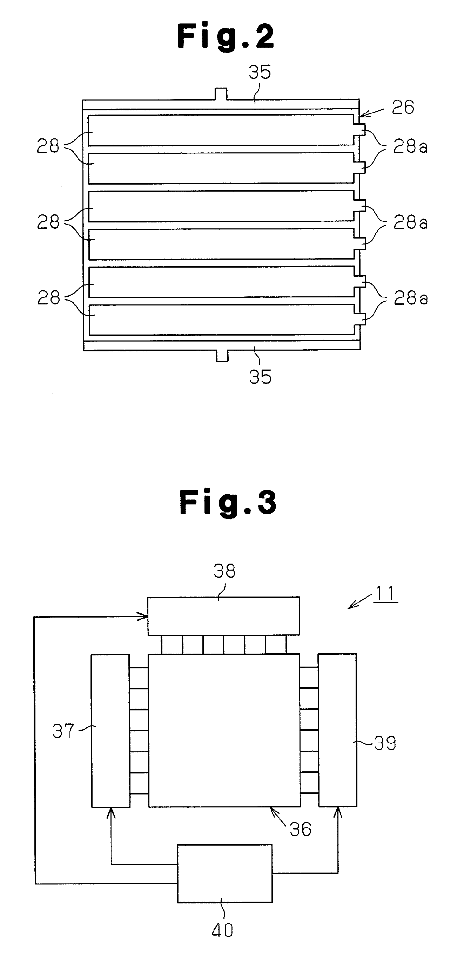

In the organic EL element 25, the transparent electrode 26 arranged at the side facing the liquid crystal panel 12 is formed by a sheet electrode shared by all the light emitting regions. The plurality of opposing electrodes 28 arranged opposite to the transparent electrode 26 with respect to the organic layers 27 are formed to extend in lines (in stripes) using a material having a lower resistance than the material for the transparent electrode 26. The opposing electrodes 28 extend in a direction perpendicular to the vertical scanning direction (horizontal direction in Fig. 1(b) and Fig. 1(c)) of the liquid crystal 16 (in the direction vertical to the plane of Fig. 1(b) and Fig. 1(c)), and have terminals 28a on one of their longitudinal ends (refer to Fig. 2). Each organic layer 27 corresponds to one opposing electrode 28 and extends linearly in the same manner as the corresponding opposing electrode 28. A portion of the organic EL element 25 corresponding to each opposing electrode 28 forms a linear light emitting region 30 that extends in the direction perpendicular to the vertical scanning direction of the liquid crystal 16, and the plurality of linear light emitting regions 30 form the planar light emitting region of the organic EL element 25. The organic layer 27 and the opposing electrode 28 forming each linear light emitting region 30 are partitioned from the organic layer 27 and the opposing electrode 28 of the adjacent linear light emitting region 30 by a partition 31, which is formed from an insulating material.

Each organic layer 27 is formed by laminating a hole transport layer 32, a light emitting layer 33, and an electron transport layer 34 from the side of the transparent electrode 26. The light emitting layer 33 is configured to emit white light. Known structures for emitting white light include a structure in which layers emitting red, green, and blue light are formed by finely applying these different layers into a plane to enable the entire layer to emit white light as a whole, a structure in which layers emitting red, green, and blue light are laminated to enable the entire layer to emit white light as a whole, and a structure in which red, green, and blue pigments are dispersed in host molecules or polymers.

As shown in Fig. 1(c), each linear light emitting region 30 is formed to have a width corresponding to the total width of the regions 20a, 20b, and 20c for a plurality of pixels and not a width corresponding to the total width of the three regions 20a, 20b, and 20c for one pixel. More specifically, each linear light emitting region 30 is formed to have the width necessary to illuminate pixel regions for a plurality of lines and is not arranged for simultaneously scanning each liquid crystal pixel region in one line.

As shown in Fig. 2, the transparent electrode 26 has terminals units 35 at its ends in the scanning direction of the liquid crystal 16 (vertical direction in Fig. 2). The terminal units 35 are made of metal (e.g. aluminum) and are arranged to extend over the entire width of the transparent electrode 26 (in the horizontal direction in Fig. 2). The opposing electrodes 28 are arranged at fixed intervals and extend in parallel with the terminal units 35.

Figs. 1(b), 1(c), and 2 do not show the actual states of the liquid crystal panel 12 and the illumination unit 13 but schematically show the liquid crystal panel 12 and the illumination unit 13 to describe their structures. The sizes or thickness ratios etc. of the components of the liquid crystal panel 12 and the illumination unit 13 differ from the actual sizes or thickness ratios.

As shown in Fig. 3, a gate driver 37 for driving gate electrodes of the TFTs 18 and a source driver 38 for driving source electrodes (data electrodes) of the TFTs 18 are arranged outward from a display unit 36 that is formed by the liquid crystal panel 12 and the illumination unit 13. Further, a driver 39 for driving the opposing electrodes 28 is arranged outward from the display unit 36. The drivers 37 to 39 are driven based on control signals provided from a controller 40.

The gate driver 37 provides the gate electrodes of the TFTs 18 with an address signal (sequential scan signal) based on a control signal from the controller 40. The source driver 38 provides the source electrodes of the TFTs 18 with a data signal based on a control signal from the controller 40. The time used to scan the entire screen once, that is, the single frame time, is set at 1/60 second. Thus, the time interval at which an address signal is output is expressed by (1/60) * (1/An) seconds, where An represents the number of address signal lines.

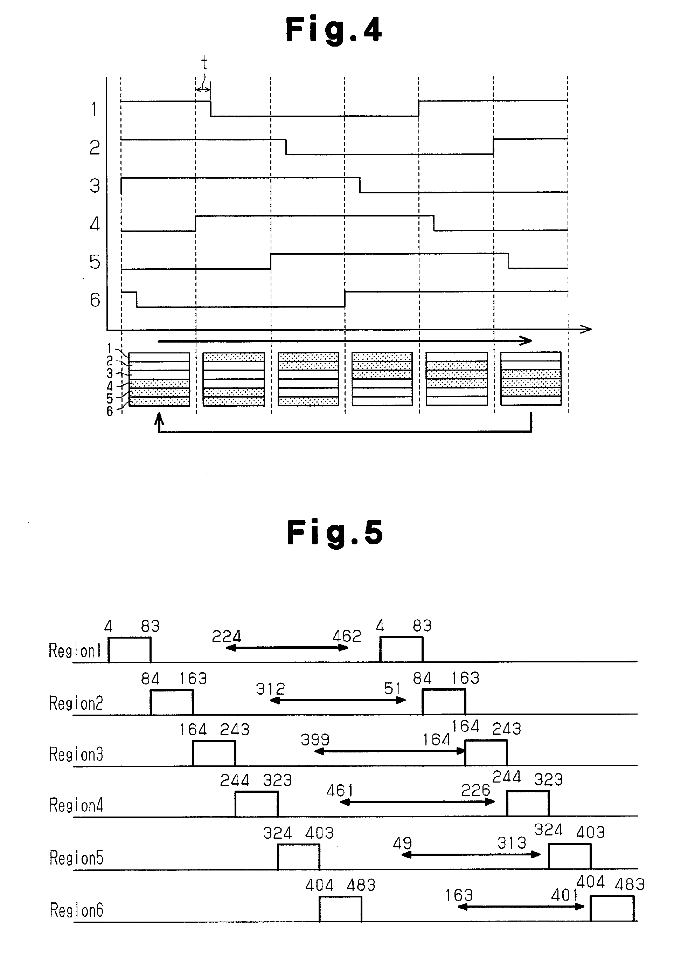

The controller 40 controls the plurality of linear light emitting regions 30 to switch between the light emitting state and the non-light emitting state in a manner that the linear light emitting regions 30 sequentially emit light in synchronization with the vertical scanning of the liquid crystal 16, that is, the output of an address signal. Fig. 4 shows the timings at which each linear light emitting region 30 is switched between the light emitting state and the non-light emitting state. The upper side of the drawing shows the on-off timings of each opposing electrode 28, and the lower side of the drawing shows the light emitting state (state indicated by blank) and the non-light emitting state (state indicated by halftone) of each linear light emitting region 30. It should be noted here that Fig. 4 schematically shows a case in which each opposing electrode 28 has the same current density and each opposing electrode 28 has the same on-period within the single frame time.

In the present embodiment, as shown in Fig. 4, the controller 40 outputs a command signal to the driver 39 in a manner that each linear light emitting region 30 is sequentially set in the light emitting state (illumination state) at time intervals of 1/6 of the single frame time, and a plurality of (e.g., three) linear light emitting regions 30 are set in the light emitting state simultaneously in a normal state. Here, the term "normal state" refers to periods excluding the timing at which the linear light emitting regions 30 switch from the light emitting state to the non-light emitting state or from the non-light emitting state to the light emitting state.

As shown in Fig. 4, when a linear light emitting region 30 is switched from the light emitting state to the non-light emitting state, the controller 40 outputs a command signal to the driver 39 in a manner that the linear light emitting region 30 is switched to the non-light emitting state after another linear light emitting region 30 is switched to the light emitting state in place of the linear light emitting region 30 that is switched to the non-light emitting state. For example, in Fig. 4, when the linear light emitting region 30 denoted by reference numeral 1 is switched from the light emitting state to the non-light emitting state and the linear light emitting region 30 denoted by reference numeral 4 is switched from the non-light emitting state to the light emitting state, the linear light emitting region 30 denoted by reference numeral 1 is set in the non-light emitting state after a predetermined time t elapses from when the linear light emitting region 30 denoted by reference numeral 4 is set in the light emitting state (on state). The predetermined time t is extremely short and causes almost no changes that can be observed by human eyes.

Fig. 4 schematically shows a case in which each linear light emitting region 30 is maintained in a light emitting state for the same period. However, the transparent electrode 21 has a volume resistivity that is ten times or greater than that of the opposing electrodes 28, and the density of the current flowing through the opposing electrodes 28 decreases as the distance from the terminal units 35 to the opposing electrodes 28 increases. Thus, when the on-period within the single frame time of each opposing electrode 28 is the same, the brightness of each linear light emitting region 30 becomes higher in linear light emitting regions 30 including opposing electrode 28 that are closer to the terminal units 35. This increases the uneven brightness in the entire light emitting region. In the present embodiment, each linear light emitting region 30 has substantially the same brightness. Thus, the controller 40 controls the opposing electrodes 28 in a manner that opposing electrodes 28 closer to the terminal units 35 have a smaller on-duty OD and opposing electrodes 28 farther from the terminal units 35 have a greater on-duty OD.

Fig. 5 is a time chart showing the relationship between the data writing period of the pixel electrodes 17 and the on-duty OD of the opposing electrodes 28. The controller 40 internally performs counting using a clock, and 525 counts correspond to a single frame time. Within the single frame time, the period of 480 counts is used to perform drive data rewriting of the liquid crystal. In Fig. 5, for example, the drive data rewriting of pixel electrodes 17 corresponding to the linear light emitting region 30 denoted by reference numeral 1 is performed in the period from the 4th count to the 83rd count. More specifically, the period of consecutive 80 counts is used to perform the drive data rewriting of the pixel electrodes 17 corresponding to the linear light emitting region 30. The terminal units 35 are arranged on the two ends of the transparent electrode 26, and the opposing electrodes 28 are arranged symmetric with respect to the middle in the vertical scanning direction of the liquid crystal. Thus, as shown in Fig. 5, the linear light emitting regions 30 denoted by reference numerals 1 and 6 are controlled with the same on-duty OD, the linear light emitting regions 30 denoted by reference numerals 2 and 5 are controlled with the same on-duty OD, and the linear light emitting regions 30 denoted by reference numerals 3 and 4 are controlled with the same on-duty OD. In Fig. 5, the value of the on-duty OD is expressed by the length of each arrow.

In the present embodiment, the linear light emitting regions 30 denoted by reference numerals 1 and 6 are set in the light emitting state in the period of 238 counts, the linear light emitting regions 30 denoted by reference numerals 2 and 5 are set in the light emitting state in the period of 264 counts, and the linear light emitting regions 30 denoted by reference numerals 3 and 4 are set in the light emitting state in the period of 290 counts as shown in Fig. 5. As a result, the linear light emitting regions 30 closer to the terminal units 35 of the transparent electrode 26 have a smaller on-duty. This consequently reduces differences in brightness in the entire light emitting region. Further, the linear light emitting region 30 denoted by reference numeral 1 is maintained in the light emitting state until the 462nd count, and the linear light emitting region 30 denoted by reference numeral 4 is set in the light emitting state at the 461st count. This means that the linear light emitting regions 30 denoted by reference numerals 1 and 4 are both in the light emitting state in the period of one count from the 461st count to the 462nd count. Each linear light emitting region 30 is controlled to switch between the light emitting state and the non-light emitting state based on a command signal provided from the controller 40. The linear light emitting region 30 that illuminates a portion of the liquid crystal 16 immediately above the linear light emitting region 30 is controlled to be in the non-light emitting state at least in a drive data rewriting period of the portion of the liquid crystal 16. When each linear light emitting region 30 corresponds to the pixel electrodes 17 of one scan line, the data writing period corresponding to one scan line is the drive data rewriting period for the portion of the liquid crystal 16 immediately above the linear light emitting region 30. However, in the present embodiment, each linear light emitting region 30 corresponds to pixel electrodes 17 of scan lines of 80 counts, and the linear light emitting region 30 is maintained in the non-light emitting state during a drive data rewriting period T corresponding to the scan lines of 80 counts. Afterwards, the linear light emitting region 30 is maintained in the on state for a period set in advance.

The operation of the LCD device 11 will now be described.

When the LCD device 11 is activated to display an image on a display screen of the liquid crystal panel 12, an address signal is output from the gate driver 37 based on a command signal from the controller 40, the TFT 18 corresponding to each line is set in the on state, and data is written to each pixel electrode 17 based on a data signal output from the source driver 38. The written data is accumulated in an accumulation capacitor (not shown) of the pixel electrode 17 as an electric charge for charging and discharging. Until the next data writing is performed, a voltage corresponding to the electric charge is applied to the pixel electrode 17. As a greater voltage is applied to each pixel electrode 17, the amount of light transmitted through a portion of the liquid crystal 16 facing the pixel electrode 17 increases. When the drive data writing of each pixel electrode 17 is performed, the linear light emitting region 30 facing the pixel electrode 17 is maintained in the non-light emitting state. This improves the image quality of the moving image. Thus, the LCD device 11 is suitable for use as a display device for a computer such as a personal computer that displays a moving image, or a display device for a liquid crystal television, a DVD (digital video disc) recorder, a mobile telephone, or a digital video camera.

In the illumination unit 13, an on-signal is output from the driver 39 to each opposing electrode 28 in synchronization with an address signal based on a command signal from the controller 40. While an on-signal is being output, current flows through the organic EL element 25 and the light emitting layer 33 emits white light. Light from each light emitting layer 33 is emitted from the substrate 24 toward the liquid crystal panel 12 and enters the liquid crystal panel 12 from the first substrate 14.

Each linear light emitting region 30 sequentially emits light in synchronization with the vertical scanning of the liquid crystal 16. However, lines of pixel electrodes 17 corresponding to a plurality of scan lines of the liquid crystal 16 face a single linear light emitting region 30 in the present embodiment. Thus, an on-signal to the opposing electrodes 28 of the linear light emitting region 30 is output after the drive data writing of the TFTs 18 of the lines of pixel electrodes 17 facing the linear light emitting region 30 is completed.

Then, the amount of light corresponding to the state of voltage application to the pixel electrodes 17 is transmitted through the liquid crystal 16 and is transmitted through the regions 20a to 20c of the color filter 20 via the transparent electrode 21. The user of the LCD device 11 views an image formed by light transmitted through the color filter 20 as a display of the LCD device 11.

When a color image is displayed, the colors of the image are adjusted to desired colors by mixing the three primary colors, red, green, and blue in each pixel. In the present embodiment, a substantially fixed amount of white light is emitted from the illumination unit 13, and the voltage applied to each pixel electrode 17 is changed to adjust the amount of light transmitted through a portion of the color filter 20 corresponding to each pixel, that is, to adjust the ratio of the three primary colors of each pixel.

The LCD device 11 of the above embodiment has the advantages described below.

(1) The backlight of the LCD device 11 is formed by the EL element, and the planar light emitting region of the EL element is formed by the linear light emitting regions 30 that extend in the direction perpendicular to the vertical scanning direction of the liquid crystal 16. The linear light emitting regions 30 are controlled to switch between the light emitting state and the non-light emitting state based on a command signal provided from the controller 40 in a manner that the linear light emitting regions 30 sequentially emit light in synchronization with vertical scanning of the liquid crystal 16. The linear light emitting region 30 corresponding to the portion of the liquid crystal 16 immediately above the linear light emitting region 30 is controlled to be in the non-light emitting state at least in the drive data rewriting period of the portion of the liquid crystal 16.

Thus, even when the response of the liquid crystal to the transmission state or to the non-transmission state is delayed when a moving image is displayed, residual images are removed and the image quality of the moving image is improved. This structure also reduces the thickness, the weight, and the number of components of the backlight. Further, a portion of the display unit 36 of the LCD device 11 that needs illumination is selectively driven to emit light so that this structure reduces power consumption of the LCD device 11 as compared with the structure for driving the entire illumination unit 13 to emit light when the LCD device 11 is used.

(2) The EL element is the organic EL element 25 including the light emitting layer 33 that is formed by a thin film of an organic EL material. The EL element emits light with a lower voltage than an inorganic EL element including a light emitting layer that is formed using an inorganic EL material.

(3) The linear light emitting regions 30 are controlled in a manner that a plurality of linear light emitting regions 30 simultaneously emit light in the normal state, and that when one linear light emitting region 30 is switched from the light emitting state to the non-light emitting state, the linear light emitting region 30 is set in the non-light emitting state after another linear light emitting region 30 is switched to the light emitting state in place of the linear light emitting region 30 that is switched to the non-light emitting state. Here, when a plurality of linear light emitting regions 30 are controlled to emit light simultaneously, a command for switching a linear light emitting region 30 that is in the light emitting state and a command for switching a linear light emitting region 30 that is in the non-light emitting state may be output at the same time. In this case, before one linear light emitting region 30 is set in the light emitting state (on state), the other linear light emitting region may be set in the non-light emitting state. In this case, the number of linear light emitting regions 30 in the light emitting state becomes less than that in the normal state. When a constant current flows through the entire light emitting region at all times, an overcurrent flows through the linear light emitting regions 30 in the light emitting state during that time. This shortens the life of the organic EL element 25. However, with the above structure in the present embodiment, although the switching temporarily causes the number of linear light emitting regions 30 that are in the light emitting state to be greater than that in the normal state, the number of linear light emitting regions 30 in the light emitting state does not become less than that in the normal state. Thus, no overcurrent flows through each linear light emitting region 30. This structure improves the durability of the organic EL element.

(4) In the organic EL element 25, the transparent electrode 26 arranged at the side facing the liquid crystal panel is formed by the sheet electrode shared by all the light emitting regions. The opposing electrodes 28, which are formed from a material having a lower resistance than the material for the transparent electrode 26 and are arranged at the opposite side to the transparent electrode 26 with respect to the light emitting layer 33, are formed in the shapes corresponding to the linear light emitting regions 30. This structure reduces differences in brightness in the direction vertical to the vertical scanning direction of the liquid crystal in each linear light emitting region.

(5) The transparent electrode 26 has the terminal units 35 at the ends in the vertical scanning direction of the liquid crystal 16. The opposing electrodes 28 closer to the terminal units 35 are controlled to have a smaller on-duty and the opposing electrodes 28 farther from the terminal units 35 are controlled to have a greater on-duty. More specifically, the opposing electrodes 28 having a greater current density are controlled to have a smaller on-duty and the opposing electrodes 28 having a smaller current density are controlled to have a greater on-duty. As a result, all the linear light emitting regions 30 have substantially the same brightness. This reduces brightness unevenness in the entire light emitting region.

(6) The organic EL element 25 emits white light, and the liquid crystal panel 12 has the color filter 20. As a result, the LCD device 11 displays a moving image with high image quality even in the case of full color display. Further, the structure of the color filter 20 is simpler than the structure for obtaining the necessary three primary colors by combining light emission of light other than white light (e.g., blue light emission) with a color conversion layer. Further, as compared with when an inorganic EL element is used, a wider range of EL materials are usable in the color display device. Thus, the freedom for selection of the EL materials is high. This enables easy reproduction of colors.

(7) A plurality of linear light emitting regions 30 are simultaneously maintained in the light emitting state in the normal state. Thus, the period in which each linear light emitting region 30 is in the light emitting state is longer. This improves the brightness of the entire display screen as compared with the structure in which one linear light emitting region 30 constantly emits light.

(8) Among the two electrodes of the organic EL element 25, the opposing electrodes 28 arranged opposite to the liquid crystal panel 12 with respect to the organic layers 27 function to reflect light. Thus, as compared with when the opposing electrodes 28 are formed using electrodes that do not function to reflect light, light traveling from the organic layers 27 toward the opposing electrodes 28 is efficiently reflected by the opposing electrodes 28. This increases the amount of light emitted from the transparent electrode 26.

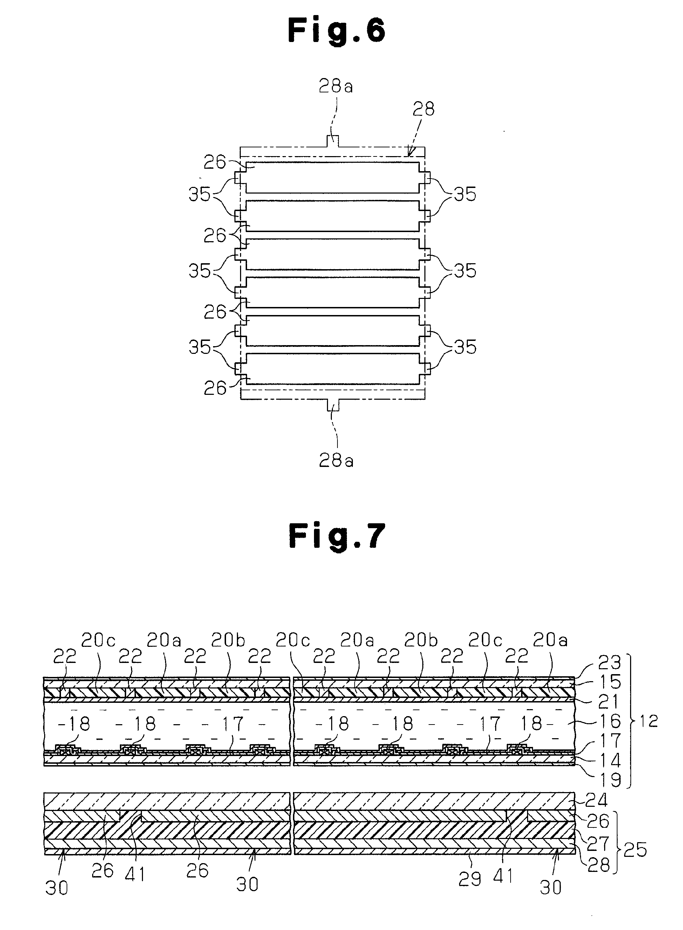

Another embodiment of the present invention that differs from the above embodiment in the structure of the linear light emitting regions 30 will now be described with reference to Figs. 6 and 7. The components common to the above embodiment will be given the same reference numerals as in the above embodiment and will not be described in detail.

As shown in Fig. 6, a light emitting region is entirely formed to have a vertically long rectangular shape having a longer length in the vertical scanning direction of liquid crystal 16 in the present embodiment. Transparent electrodes 26 are formed by a plurality of divided transparent electrodes 26 that extend in parallel with the short sides of the vertically long rectangular shape. Each transparent electrode 26 has terminal units 35 on its two ends. More specifically, the terminal units 35 are arranged at positions corresponding to the long sides of the vertically long rectangular shape. An opposing electrode 28, which is formed by a sheet electrode, has two terminals 28a at positions corresponding to the short sides of the vertically long rectangular shape.

The transparent electrodes 26 have a greater volume resistivity than metal electrodes and are therefore more advantageous in terms of uniform brightness when the transparent electrodes 26 have a shorter distance from their terminal units 35 to their middle positions.

In the above embodiment shown in Figs. 1 to 5, the light emitting region is entirely formed in a horizontally long rectangular shape having a longer length in the direction perpendicular to the vertical scanning direction of the liquid crystal 16. In this case, the transparent electrode 26 is more advantageous when its terminal units 35 are arranged at positions corresponding to the long sides of the horizontally long rectangular shape. However, to form the plurality of linear light emitting regions 30 to extend in the direction perpendicular to the vertical scanning direction of the liquid crystal 16, the terminal units of the electrodes formed in the shapes corresponding to the linear light emitting regions 30 need to be arranged in the vertical scanning direction of the liquid crystal 16. Thus, when the plurality of linear light emitting regions 30 are formed in the above embodiment shown in Figs. 1 to 5, the opposing electrodes 28 functioning as the cathode in the electrodes of the organic EL element 25 are formed by the divided opposing electrodes 28 corresponding to the linear light emitting regions 30. The transparent electrode 26 functioning as the anode is formed by the sheet electrode and its terminal units 35 are arranged at positions corresponding to the long sides of the horizontally long rectangular shape.

In the present embodiment, the light emitting region is entirely formed in the vertically long rectangular shape. Thus, the transparent electrodes 26 are more advantageous in terms of uniform brightness when their terminal units 35 are arranged at positions corresponding to the long sides of the vertically long rectangular shape. Thus, the transparent electrodes 26 are formed by the divided transparent electrodes 26 having shapes corresponding to the linear light emitting regions 30.

To form the divided transparent electrodes 26, a transparent substrate 24 on which a film of ITO is formed is prepared and the ITO film is etched to form a plurality of transparent electrodes 26 having terminal units 35 at their two ends. Afterwards, an organic layer 27, an opposing electrode 28, and a protective film 29 are sequentially formed.

In the above embodiment shown in Figs. 1 to 5, the partitions 31 for partitioning the adjacent linear light emitting regions 30 are formed on the single transparent electrode 26 as shown in Fig. 1(c). However, in the structure of the present embodiment, the partitions 31 are eliminated, and grooves 41 for partitioning adjacent transparent electrodes 26 are filled by the organic layer 27 to insulate the transparent electrodes 26 included in the adjacent linear light emitting regions 30 as shown in Fig. 7.

Thus, the structure of the present embodiment improves the uniformity of brightness in the entire light emitting region as compared with when the divided opposing electrodes 28 corresponding to the linear light emitting regions 30 are formed in the illumination unit 13 whose planar light emitting region formed by the plurality of linear light emitting regions 30 is entirely formed in the vertically long rectangular shape. Further, the elimination of the partitions 31 for insulating the adjacent linear light emitting regions 30 reduces the number of steps required during manufacturing.

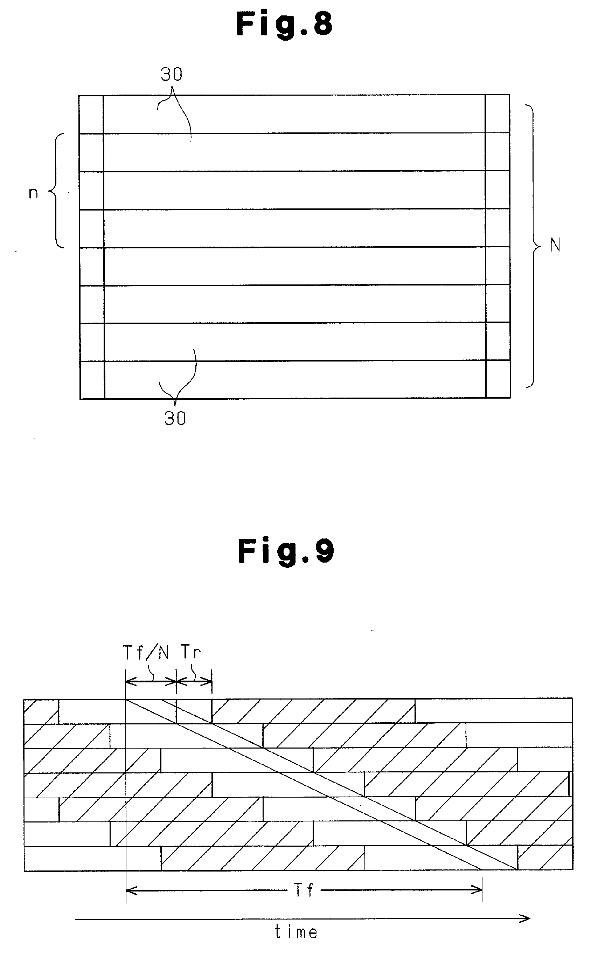

Another embodiment of the present invention that further improves image quality and extends the life of an organic EL element 25 when an LCD device 11 displays a moving image will now be described with reference to Figs. 8 and 9.

The structure of an illumination unit 13 in the present embodiment is basically the same as that in the above embodiment shown in Figs. 1 to 5 but differs from the above embodiment in the illumination control method of the illumination unit 13, that is, the light emission control method for controlling linear light emitting regions 30. In the present embodiment, when the single frame time of the LCD device 11 is represented by Tf, the response time of liquid crystal is represented by Tr, the number of lines of the linear light emitting regions 30 is represented by N, and the number of lines that are illuminated simultaneously is represented by n, the values of Tf, Tr, N, and n satisfy the following expressions.

$$\{(Tf/N)+Tr\}+(Tf/N)*n \leq Tf \qquad (1)$$

$$Tf < \{(Tf/N)+Tr\}+(Tf/N)*(n+1) \qquad (2)$$

Here, all the linear light emitting regions 30 are formed to have the same width in the present embodiment.

The basis for the two expression will now be described. As shown in Fig. 8, the number of lines of the linear light emitting regions 30 included in the illumination unit 13 is N (N is a natural number greater than or equal to 2), and the linear light emitting regions 30 are sequentially illuminated (emit light) in synchronization with vertical scanning of the liquid crystal 16 in a manner that linear light emitting regions 30 of n lines are illuminated simultaneously. When the single frame time is Tf, the vertical scanning time of a plurality of lines of the liquid crystal 16 corresponding to the linear light emitting region 30 of one line is represented by Tf/N.

Fig. 9 is a diagram describing the conditions for setting the illumination duty of the linear light emitting regions 30. The horizontal axis indicates time, and the vertical axis indicates the position in the vertical scanning direction of the liquid crystal panel. Belt regions that extend along the horizontal axis represent regions of the liquid crystal panel corresponding to the linear light emitting regions 30. In Fig. 9, portions marked with inclined lines indicate that the corresponding linear light emitting regions 30 are in the light emitting state.

In Fig. 9, the linear light emitting region 30 at the highest position are observed. In this case, the time required from when the drive data rewriting of a plurality of lines of the liquid crystal 16 corresponding to this linear light emitting region 30 is started to when the response of the liquid crystal 16 is completed is expressed as (Tf/N)+Tr. To improve the image quality of a moving image, this linear light emitting region 30 needs to be maintained in the non-light emitting state during the time (Tf/N)+Tr. Further, the number of lines of the linear light emitting regions 30 that are controlled to emit light simultaneously is n so that the period in which one linear light emitting region 30 is maintained in the light emitting state is expressed as (Tf/N)*n.

The period (Tf/N)+Tr in which the linear light emitting region 30 is maintained in the non-light emitting state and the period (Tf/N)*n in which the linear light emitting region 30 is maintained in the light emitting state need to be within the single frame time Tf. Thus, conditional expression (1) is necessary. This conditional expression needs to be satisfied to improve the image quality of a moving image.

A case in which the value of n is at the maximum will now be considered. In this case, if the time required for illumination corresponding to one frame is longer than the single frame time Tf when the number of lines of the linear light emitting regions 30 that are controlled to emit light simultaneously is increased by one from the value of n, this would indicate that certain linear light emitting regions 30 are simultaneously emitting light more than necessary. To avoid such overlapping of light emission, conditional expression (2) is necessary. This conditional expression needs to be satisfied to maximize the number of lines of the linear light emitting regions 30 that are illuminated simultaneously.

Expressions (1) and (2) are transformed into expression (3) as shown below.

$$(N-2)-(Tr/Tf)*N<n\leq(N-1)-(Tr/Tf)*N \qquad (3)$$

The single frame time Tf and the liquid crystal response time Tr are determined by the performance of the liquid crystal panel 12 and the liquid crystal 16. In contrast, the number of lines N of the linear light emitting regions 30 is determined based on factors including the manufacturing cost, the processing accuracy, and the simplicity in control of the organic EL element 25. Thus, when the number of lines N of the linear light emitting regions 30 and the number of lines n of the linear light emitting regions 30 that are illuminated simultaneously are set to satisfy expression (3), the image quality of a moving image is improved, and the number of lines of the linear light emitting regions 30 that are illuminated simultaneously is maximized. The controller 40 outputs an on-signal to the terminals 28a of the opposing electrodes 28 of the linear light emitting regions 30 via the driver 39 to set the linear light emitting regions 30 in the light emitting state.

When the number of lines of the linear light emitting region 30 that are illuminated simultaneously is maximized, the peak current value of each linear light emitting region 30 is minimized while the illumination unit 13 is producing the same brightness. This consequently extends the life of the organic EL element 25. When the current consumption amount is the same, the power efficiency is improved and the brightness of the illumination unit 13 is improved. Further, the peak brightness is minimized. This makes it easy on human eyes.

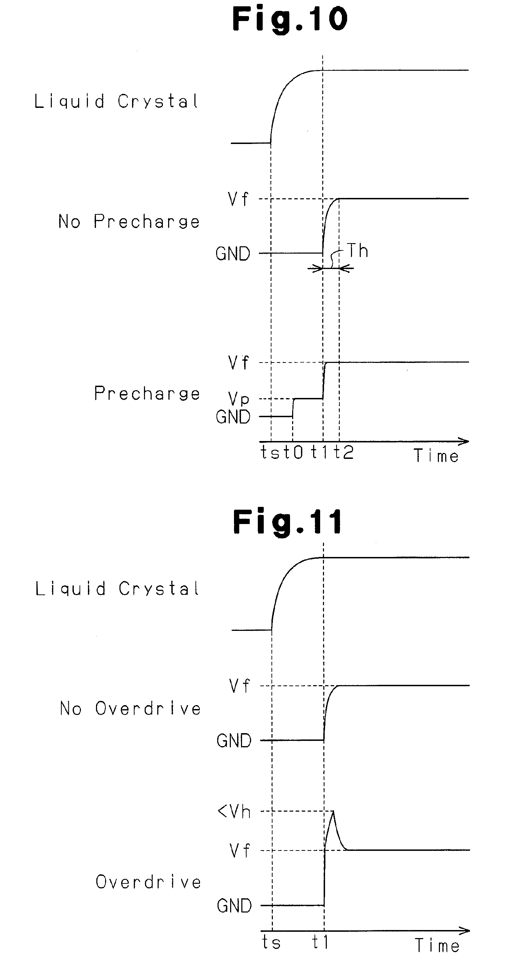

Another embodiment of the present invention that shortens the response time without increasing a voltage applied to an organic EL element 25 when a linear light emitting region 30 is switched from a non-light emitting state to a light emitting state and is applicable to liquid crystal with high responsiveness will now be described with reference to Fig. 10.

An organic EL element is considered to be electrically replaceable with a structure including a diode element and a parasitic capacitance element connected in parallel to the diode element. When a drive voltage is applied to the organic EL element, an electric charge corresponding to the electric capacitance of the organic EL element is first accumulated in the organic EL element. When the applied voltage reaches a predetermined voltage unique to the element (threshold at which light is emitted), a current starts flowing through an organic layer that forms a light emitting layer from the anode side of the diode element. As a result, the organic layer emits light at an intensity that is substantially proportional to this current.

The drive speed of the organic EL element is higher than the drive speed of the liquid crystal. Thus, no problem arises when an LCD device 11 is not driven with pseudo-impulses and an illumination unit 13 emits light on its entire surface like a typical backlight. However, when the LCD device 11 is driven with pseudo-impulses and the responsiveness of the liquid crystal is improved to improve the image quality of a moving image, the response time of the organic EL element is also required to be shortened.

The present embodiment differs from the above embodiment in the method for applying a drive voltage to the organic EL element 25 to switch the linear light emitting region 30 from the non-light emitting state to the light emitting state when the LCD device 11 is driven with pseudo-impulses. The present embodiment uses a drive method called referred to as precharging. When no precharging is performed, the linear light emitting region 30 is switched from the non-light emitting state to the light emitting state at timing t1 shown in the middle of Fig. 10 at which a predetermined time set in advance elapses after the drive data writing of a portion of the liquid crystal 16 that is immediately above the linear light emitting region 30 is completed. Timing t1 may be set, for example, as the timing at which the response of the liquid crystal is completed after the drive data writing of the first line of the liquid crystal corresponding to the linear light emitting region 30 is started at timing ts and the drive data writing of the last line of the liquid crystal is completed. The timing at which the response of the liquid crystal is completed typically refers to the timing at which 90% or more of the response of the liquid crystal is completed.

In the present embodiment (in which precharging is performed), when the organic EL element 25 is controlled to switch from the non-light emitting state to the light emitting state, a voltage necessary for light emission is applied to the organic EL element 25 that has been in a state in which a voltage lower than the voltage necessary for light emission is being applied in order to switch the organic EL element 25 to the light emitting state. For example, as shown in the lower portion of Fig. 10, when the organic EL element 25 is switched from the non-light emitting state to the light emitting state, a voltage Vp lower than a predetermined voltage Vf necessary for light emission is applied at timing t0 preceding the predetermined timing (timing t1). Then, the predetermined voltage Vf is applied at timing t1. Timing t0 is set in a manner that the electric charge accumulation (charging) to the parasitic capacity element of the organic EL element 25 is completed by timing t1 after the voltage Vp is applied to the organic EL element 25. Timing t0 may be set, for example, by calculating the time required to complete the electric charge accumulation to the parasitic capacity element of the organic EL element 25 based on a time constant or may be set as the writing start timing of the last line of the liquid crystal 16 that is immediately above the organic EL element 25.

When no precharging is performed, the organic EL element 25 is set in the light emitting state at timing t2 at which the time Th required to reach a constant voltage unique to the element elapses after the predetermined voltage Vf necessary for light emission starts being applied at timing t1 and the electric charge accumulation to the parasitic capacitance element is completed. In the present embodiment, the electric charge accumulation to the parasitic capacitance element of the organic EL element 25 is completed before the predetermined voltage Vf necessary for light emission starts being applied at timing t1. Thus, when the voltage Vf starts being applied at timing t1, the voltage reaches the predetermined voltage Vf in a shorter time and the organic EL element 25 is set in the light emitting state earlier than when no precharging is performed. This shortens the response time of the organic EL element 25 during light emission, and enables the structure to be applicable to liquid crystal with high responsiveness. Further, the voltage be applied in the light emitting state is the same as the voltage required when no precharging is performed. Thus, the power supply voltage does not need to be changed.

Another embodiment of the present embodiment that shortens the response time of an organic EL element 25 when a linear light emitting region 30 is switched from a non-light emitting state to a light emitting state and is applicable to a liquid crystal with high responsiveness will now be described with reference to Fig. 11. The components common to the above embodiment shown in Fig. 10 will be given the same reference numerals as in the above embodiment and will not be described in detail.

In the present embodiment, the organic EL element 25 is supplied with a voltage higher than the voltage necessary for light emission or with a current higher than the current necessary for light emission when the organic EL element 25 is controlled to switch from the non-light emitting state to the light emitting state. The organic EL element 25 uses a drive method referred to as overdriving. As shown in the lower portion of Fig. 11, for example, when overdriving is performed and the organic EL element 25 is switched from the non-light emitting state to the light emitting state, a voltage Vf necessary for light emission is applied after the drive data writing of a portion of the liquid crystal 16 that is immediately above the linear light emitting region 30 is completed and a voltage Vh higher than the voltage Vf necessary for light emission is applied at timing t1 set in advance (predetermined timing). The predetermined timing (timing t1) is the same as the predetermined timing used when no overdriving is performed as shown in the middle portion of Fig. 11. The timings at which the value of the voltage Vh and the applied voltage are switched from the voltage Vh to the necessary voltage Vf are set based on factors including the capacitance of the parasitic capacitance element of the organic EL element 25 and the target response time.

In the present embodiment, the voltage Vh higher than the predetermined voltage Vf necessary for light emission is applied at timing t1. As compared with when the voltage Vf is applied like when no overdriving is performed, the voltage applied rises steeply, and the time required to complete the charge accumulation to the parasitic capacitance element of the organic EL element 25 is shortened. Thus, the voltage applied to the organic EL element 25 reaches the predetermined voltage Vf in a shorter time and the organic EL element 25 is set in the light emitting state earlier than when no overdriving is performed. This shortens the response time of the organic EL element 25 during light emission and enables the structure to be applicable to liquid crystal with high responsiveness.

Further, the period in which the voltage Vh higher than the predetermined voltage Vf necessary for light emission is applied to the organic EL element 25 is a short time necessary to reduce the time required for the electric charge accumulation to the parasitic capacity element of the organic EL element 25. After the charging of the parasitic capacitance element in the organic EL element 25 is completed, the voltage applied to the organic EL element 25 is switched to the predetermined voltage Vf necessary for light emission before the actual voltage applied to the organic EL element 25 reaches the voltage Vh. As a result, the actual voltage applied to the organic EL element 25 in the light emitting state of the organic EL element 25 is lower than the voltage Vh, and the organic EL element 25 in the light emitting state does not produce unnecessarily high brightness. The organic EL element 25 emits light with targeted brightness, and the organic EL element 25 in the light emitting state is prevented from consuming a greater amount of driving power than when no overdriving is performed.

A current higher than that necessary for light emission may be supplied when the organic EL element 25 is controlled to switch from the non-light emitting state to the light emitting state. This also shortens the response time when switching the organic EL element 25 from the non-light emitting state to the light emitting state and is applicable to liquid crystal with high responsiveness.

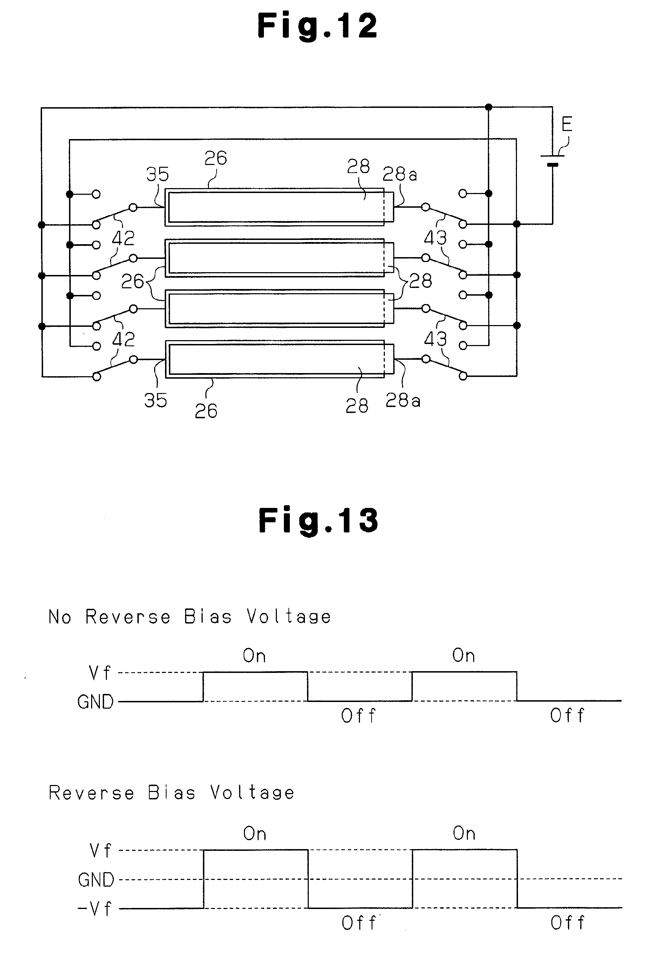

Another embodiment of the present invention that extends the life of an organic EL element 25 without reducing the light emission time of the organic EL element 25 will now be described with reference to Figs. 12 and 13.

An organic EL element is considered to be electrically replaceable with a structure including a diode element and a parasitic capacitance element connected in parallel to the diode element. The organic EL element is known to emit light with intensity substantially proportional to a forward current of the diode element. Further, the life of the organic EL element is empirically known to be extended by applying a voltage in a reverse direction irrelevant to light emission (reverse bias voltage) to the organic EL element.

In the present embodiment (in which a reverse bias voltage is used), an LCD device 11 is configured to apply a reverse bias voltage to the organic EL element 25 in a state in which a voltage is not applied to the organic EL element 25 if a reverse bias voltage is not used, that is, in a non-light emitting state in which an applied voltage is maintained at a ground level (0V) when the LCD device 11 is driven with pseudo-impulses.

As shown in Fig. 12, transparent electrodes 26 and opposing electrodes 28 are both formed in shapes corresponding to a plurality of linear light emitting regions 30. Terminal units 35 of the transparent electrodes 26 and terminals 28a of the opposing electrodes 28 are configured to be selectively connectable to the anode side and the cathode side of a power supply E via switches 42 and 43, respectively. The switches 42 and 43 are controlled by a driver 39 (refer to Fig. 3). When a terminal unit 35 is connected to the anode side of the power supply E via the switch 42 and a terminal 28a is connected to the cathode side of the power supply E via the switch 43, a forward voltage is applied to the corresponding linear light emitting region 30 of the organic EL element 25, and the linear light emitting region 30 is set in the light emitting state. When a terminal unit 35 is connected to the cathode side of the power supply E via the switch 42 and a terminal 28a is connected to the anode side of the power supply E via the switch 43, a reverse bias voltage is applied to the corresponding linear light emitting region 30 of the organic EL element 25, and the linear light emitting region 30 is set in the non-light emitting state.

In the present embodiment, portions of the organic EL element 25 corresponding to the linear light emitting regions 30 are controlled in a manner that the portions sequentially emit light in synchronization with vertical scanning of the liquid crystal 16 and each portion is set in the non-light emitting state in the data writing period of a portion of the liquid crystal 16 that is immediately above the corresponding linear light emitting region 30. When no reverse bias voltage is used, a ground level voltage (GND) is applied to the organic EL element 25 in the non-light emitting state and a predetermined voltage Vf is applied to the organic EL element 25 in the light emitting state as shown in the upper portion of Fig. 13. In the present embodiment, the predetermined voltage Vf is applied to the organic EL element 25 in the light emitting state and a reverse bias voltage -Vf is applied to the organic EL element 25 in the non-light emitting state as shown in the lower portion of Fig. 13. This structure enables a reverse bias voltage to be applied to each linear light emitting region 30 of the organic EL element 25 without lowering brightness while light emission appears to occur on the entire screen. Further, the life of the organic EL element 25 is extended.

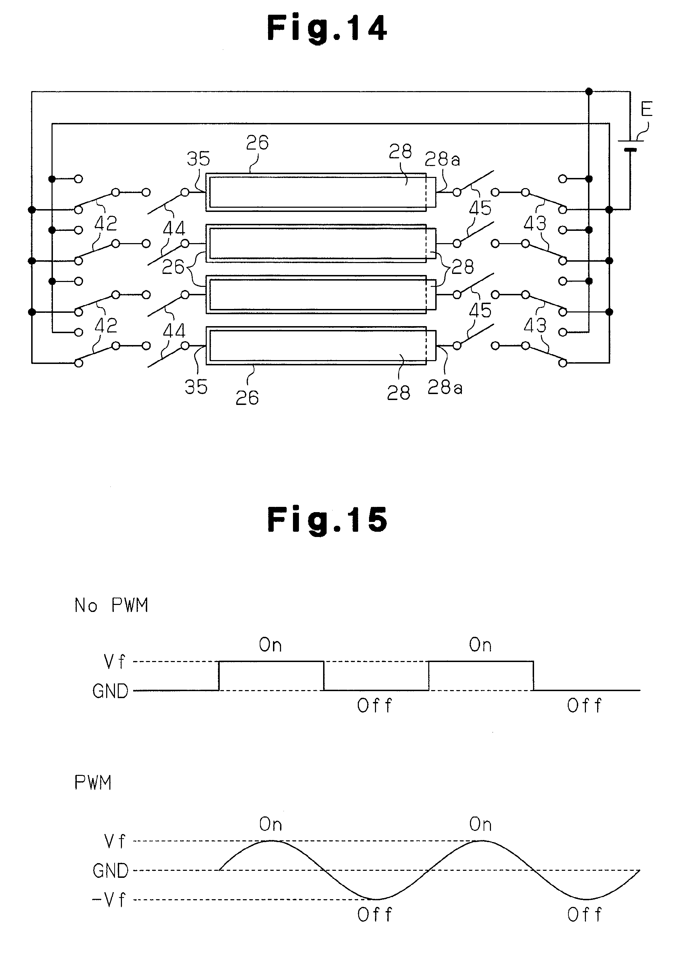

Another embodiment of the present invention that applies a reverse bias voltage to an organic EL element 25 to extend the life of the organic EL element 25 without reducing the light emission time of the organic EL element 25 will now be described with reference to Figs. 14 and 15.

The present embodiment differs from the above embodiment in that the voltage applied to each organic EL element 25 is controlled by PWM (pulse width modulation) control. The components common to the above embodiment shown in Figs. 12 and 13 will be given the same reference numerals as in the above embodiment and will not be described in detail.

As shown in Fig. 14, switching elements 44 are arranged between switches 42 and terminal units 35, and switching elements 45 are arranged between switches 43 and terminals 28a. The switching elements 44 and 45 are controlled by a driver 39 in a manner that a voltage having a sinusoidal waveform with a ground level as its center value is applied to the organic EL element 25 as shown in the lower portion of Fig. 15. In Fig. 15, an applied voltage Vf is a maximum voltage during voltage application and not a threshold voltage that is required for the organic EL element 25 to emit light. The organic EL element 25 emits light at an applied voltage lower than the voltage Vf.

In the structure in which a reverse bias voltage and a forward voltage are alternately applied to each organic EL element 25, when an applied voltage has a rectangular waveform like in the above embodiment shown in Figs. 12 and 13, an electric field relating to the organic EL element 25 changes drastically. This may cause the element to deteriorate early. However, in the present embodiment, a voltage with a sinusoidal waveform is applied to each linear light emitting region 30 of the organic EL element 25. Thus, an electric field relating to the organic EL element 25 does not change drastically. This structure further extends the life of the organic EL element 25.

To apply a reverse bias voltage to an organic EL element 25 to extend the life of the organic EL element 25 without reducing the light emission time of the organic EL element 25, a structure for applying a reverse bias voltage to each linear light emitting region 30 of the organic EL element 25 in a vertical blanking period may be employed. The vertical blanking period refers to a period from when vertical scanning of data corresponding to one frame is completed to when vertical scanning of data corresponding to the next frame is started. This period is so short that all the linear light emitting regions 30 set in the non-light emitting state during this period cannot viewed by humans.

In the present embodiment, either one of a transparent electrode 26 and an opposing electrode 28 may be formed by a sheet electrode. Only a single switch is arranged for the electrode formed by the sheet electrode. In the present embodiment, a reverse bias voltage is regularly applied to each linear light emitting region 30 of the organic EL element 25. This extends the life of the organic EL element 25. Further, the present embodiment requires less switches than the above two embodiments and simplifies the structure.

The timing at which a reverse bias voltage is applied to the organic EL element 25 is only required to be a timing within a period in which the organic EL element 25 is in the non-light emitting state and may be any timing while the organic EL element 25 is in the non-light emitting state. Further, when the reverse bias voltage has a rectangular waveform, the present embodiment is not limited to the structure in which the applied reverse bias voltage is maintained until the timing at which switching to the light emitting state is performed. For example, the applied voltage may be switched to a ground level before the timing at which the switching to the light emitting state is performed. Afterwards, the switching to the light emitting state may be performed.

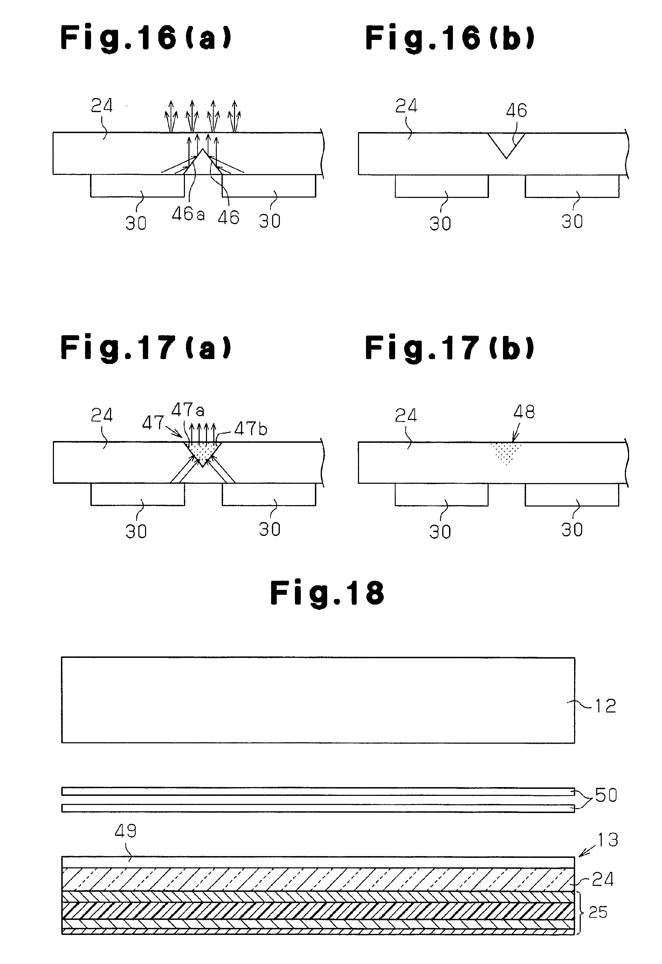

An embodiment of the present embodiment that makes dark lines generated in a non-light emitting region between adjacent linear light emitting regions 30 less visible will now be described with reference to Figs. 16(a) and 16(b). The components common to the above embodiment shown in Figs. 1 to 5 will be given the same reference numerals as in the above embodiment and will not be described in detail.

As shown in Fig. 16(a), a V-shaped groove 46 is arranged on the surface of a substrate 24 on which an organic EL element 25 is arranged. The V-shaped groove 46 is formed between adjacent linear light emitting regions 30, that is, in a portion in which the organic EL element 25 does not exist. The V-shaped groove 46 extends in parallel with the linear light emitting regions 30. A wall surface 46a of the V-shaped groove 46 is formed as an optically polished surface or a mirror surface. The V-shaped groove 46 enables the brightness of light emitted from the portions of the substrate 24 corresponding to the linear light emitting regions 30 and the brightness of light emitted from the portion of the substrate 24 between the adjacent linear light emitting regions 30 to be substantially the same.

In the present embodiment, when the organic EL element 25 emits light, the light emitted from the organic EL element 25 enters the transparent substrate 24. The organic EL element 25 is isotopic. Thus, some of the light emitted from the organic EL element 25 diagonally enters the substrate 24. Then, as shown in Fig. 16(a), some of the light that has diagonally entered the substrate 24 is reflected on the wall surface 46a of the V-shaped groove 46, and travels in a direction perpendicular to a light emitting surface of the substrate 24. Thus, light having the same brightness as the light emitted from the portions of the substrate 24 corresponding to the linear light emitting regions 30 is also emitted from the portion of the substrate 24 between the adjacent linear light emitting regions 30. This prevents dark lines from being viewable in portions of the illumination unit 13 between the adjacent linear light emitting regions 30. This structure improves display performance as compared with the structure in which such dark lines are visible.

The wall surface 46a of the V-shaped groove 46 is formed as an optically polished surface or a mirror surface. Thus, as compared with when the wall surface 46a of the V-shaped groove 46 is not formed as an optically polished surface or a mirror surface, attenuation of light through the wall surface 46a due to scattering or absorption is small. As a result, the amount of light reflected at the V-shaped groove 46 and emitted from the light emitting side of the substrate 24 increases. This enables light emitted from the organic EL element 25 to be used effectively. The opening width of the V-shaped groove 46 may precisely correspond to the interval between the adjacent linear light emitting regions 30, or may be slightly wider or narrower than the interval of the adjacent linear light emitting regions 30.

As shown in Fig. 16(b), a V-shaped groove 46 may be arranged on the surface of the substrate 24 on which an organic EL element 25 is not arranged. The V-shaped groove 46 is formed between adjacent linear light emitting regions 30. In this case, some of the light that diagonally enters the substrate 24 from the organic EL element 25 and travels toward the V-shaped groove 46 is emitted into the V-shaped groove 46. This prevents dark lines from being viewable in portions of the illumination unit 13 between the adjacent linear light emitting regions 30. The refractive index of the substrate 24 is about 1.5, and the refractive index of air is 1. Thus, the angle at which light enters the groove 46 from the substrate 24 is greater than the angle at which light is emitted from the groove 46. Accordingly, it is preferred that the V-shaped groove 46 be arranged on the surface of the substrate 24 on which the organic EL element 25 is arranged as shown in Fig. 16(a). Further, V-shaped grooves 46 may be arranged on the two surfaces of the substrate 24.

Another embodiment of the present invention that renders dark lines generated in a non-light emitting region between adjacent linear light emitting regions 30 less visible will now be described with reference to Figs. 17(a) and 17 (b). The components common to the above embodiment shown in Figs. 16(a) and 16(b) will be given the same reference numerals as in the above embodiment and will not be described in detail.

As shown in Fig. 17(a), a light scattering portion 47 is arranged on a surface of a substrate 24 opposite to the surface on which an organic EL element 25 is arranged. The light scattering portion 47 is formed between adjacent linear light emitting regions 30 and extends along the linear light emitting regions 30. The light scattering portion 47 includes a V-shaped groove 47a and a light scattering member 47b accommodated in the groove 47a. The light scattering member 47b may be formed using a transparent resin in which grains or particles having a refractive index differing from the resin are dispersed. The grains or particles are only required to function to reflect or refract light without absorbing light and do not need to be transparent. The grains or particles may be formed by, for example, resin or ceramics.

The light scattering member 47b is not limited to the transparent resin in which grains or particles are dispersed, but may be a transparent resin in which air bubbles are formed, or may be a transparent resin in which flaws or portions having a different refractivity from the surrounding portions are formed by irradiating a laser beam.

In the present embodiment, when the organic EL element 25 emits light, some of the light emitted from the organic EL element 25 diagonally enters the substrate 24. Then, as shown in Fig. 17(a), some of the light that has diagonally entered the substrate 24 is scattered in the light scattering portion 47, and some of the light travels in a direction perpendicular to a light emitting surface of the substrate 24. As a result, light is emitted not only from the portions of the substrate 24 corresponding to the linear light emitting regions 30 but also from the portion of the substrate 24 between adjacent linear light emitting regions 30. This structure prevents dark lines from being viewable in portions of the illumination unit 13 between the adjacent linear light emitting regions 30.

Instead of forming the light scattering portion 47 from a material differing from the material for the substrate 24, a light scattering portion 48 may be formed directly in a substrate 24 as shown in Fig. 17(b). The light scattering portion 48 is formed by flaws or portions having a different refractivity from the surrounding portions that are formed in the substrate 24 by irradiating a laser beam. In this case, some of the light that diagonally enters the substrate 24 from an organic EL element 25 is scattered in the light scattering portion 48, and travels in a direction perpendicular to the light emitting surface of the substrate 24. As a result, light is also emitted from the portion of the substrate 24 between the adjacent linear light emitting regions 30. This structure prevents dark lines from being viewable in portions of the illumination unit 13 between the adjacent linear light emitting regions 30.

Another embodiment of the present invention that makes dark lines generated in a non-light emitting region between adjacent linear light emitting regions 30 less visible will now be described with reference to Fig. 18. The components common to the above embodiment shown in Figs. 1 to 5 will be given the same reference numerals as in the above embodiment and will not be described in detail.

As shown in Fig. 18, a light diffusion sheet 49 is bonded to a surface of a substrate 24 opposite to its surface on which an organic EL element 25 is arranged. Further, two prism sheets 50 are arranged between an illumination unit 13 and a liquid crystal panel 12. A light diffusion sheet having a known structure and used in an LCD device is employed as the light diffusion sheet 49. For example, a light diffusion sheet formed from a transparent resin in which grains having a refractivity differing from the resin are dispersed may be used as the light diffusion sheet 49. Each of the two prism sheets 50 includes a plurality of prisms having a vertex angle of 90 degrees. The prisms of one prism sheet 50 and the prisms of the other prism sheet 50 extend in directions perpendicular to each other.

In the present embodiment, the light diffusion sheet 49 is bonded at the light emitting side of the substrate 24. Thus, light that enters the substrate 24 from the organic EL element 25 and is emitted from the light emitting surface of the substrate 24 is diffused (scattered) when passing through the light diffusion sheet 49. Thus, light is also emitted from the portion of the substrate 24 between the adjacent linear light emitting regions 30. Light that is emitted after passing through the light diffusion sheet 49 is converged at the prism sheets 50 to illuminate the liquid crystal panel 12. This structure prevents dark lines from being viewable in portions of the illumination unit 13 between the adjacent light emitting regions 30.

Prism sheets having prisms with a vertex angle other than 90 degrees may be used as the prism sheets 50, or only a single prism sheet 50 may be used. Alternatively, the prism sheets 50 do not have to be used, and the light diffusion sheet 49 may be solely used.

The above embodiments may be modified in the following forms.

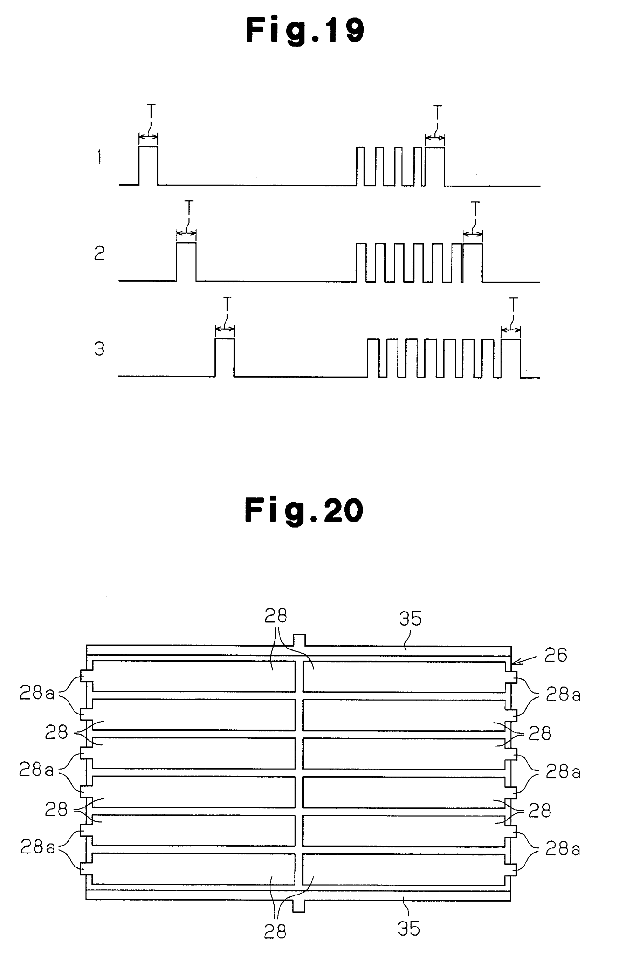

The method for setting the brightness of each linear light emitting region 30 to be substantially the same is not limited to the method of adjusting the brightness of each linear light emitting region 30 based on the length of the on-period of each opposing electrode 28 that is switched from on to off and from off to on only once within one frame. For example, as shown in Fig. 19, the brightness of each linear light emitting region 30 may be controlled by PWM light control during the on-period of each opposing electrode 28 within one frame. Fig. 19 shows the applied voltage supplying states of the opposing electrodes 28 denoted by reference numerals 1 to 3. This structure enables the brightness of each linear light emitting region 30 to be accurately adjusted and enables the unevenness of brightness caused by the internal resistance of the transparent electrode 26 to be further reduced.

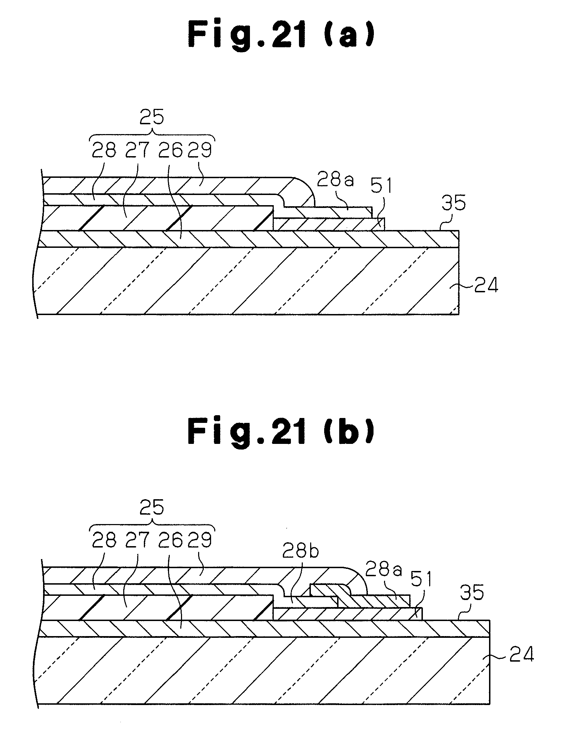

When the LCD device is configured to switch the number of its display screens between one screen and two screens, two planar light emitting regions may be arranged, and each of the two planar light emitting regions may be formed by a plurality of linear light emitting regions 30 as shown in Fig. 20. The linear light emitting regions 30 of each planar light emitting region may be controlled independently from the linear light emitting regions 30 of the other planar light emitting region. This structure avoids unnecessary illumination when only the single screen is used, and reduces consumption power. The number of display screens may be three or more.

In a display device including a liquid crystal panel 12 with a large screen, many lines of pixel electrodes 17 are vertically scanned within one frame. In such a display device, the screen may be divided into a plurality of regions in the vertical scanning direction, and pixel electrodes 17 included in each region may be vertically scanned simultaneously. In this case, an illumination unit 13 is also required to divide its light emitting region into a plurality of regions accordingly. In this case, the on-state of opposing electrodes 28 may be controlled to cause the linear light emitting regions 30 to sequentially emit light in synchronization with the vertical scanning of liquid crystal 16 in a manner that the linear light emitting regions 30 included in each region emit light simultaneously.

Instead of the structure in which a plurality of linear light emitting regions 30 are set in the light emitting state simultaneously in the normal state, the linear light emitting regions 30 may be sequentially set in the light emitting state in a manner that the linear light emitting regions 30 are set in the light emitting state one at a time.

Instead of the structure of adjusting the power supply voltage supplied to the organic EL element 25 as the method for adjusting the brightness of the display screen, the number of linear light emitting regions 30 that are set in the light emitting state simultaneously in the normal state may be changed. For example, the linear light emitting regions 30 may be controlled to be sequentially set in the light emitting state in a manner that the linear light emitting regions 30 are set in the light emitting state one at a time when the brightness is low, and in a manner that a plurality of linear light emitting regions 30 are set in the light emitting state at the same time in the case of high brightness.

The width of each opposing electrode 28 is not limited to the width that enables its illumination light to be applied to a plurality of lines of pixel electrodes 17 during light emission, but may be a width that enables its illumination light to be applied to a single line of pixel electrode 17. In this case, one opposing electrode 28 is switched between the light emitting state and the non-light emitting state in synchronization with each vertical scanning of the liquid crystal 16.

The width of each opposing electrode 28 does not have to be the same, and opposing electrodes 28 having different widths may be used. However, when each opposing electrode 28 has the same width, the control of the on-duty (on-off timing) of each opposing electrode 28 and the PWM light control within the on-period of each opposing electrode 28 are easier.

Among the two electrodes forming the organic EL element 25, the opposing electrodes 28 may be formed from a material that does not function to reflect light.

The substrates 14, 15, and 24 are not limited to glass and may be transparent resin substrates or films.

The light emitting layer 33 is not limited to a white light emitting layer and may be a blue light emitting layer. In this case, a color filter including a color conversion layer is used as the color filter 20 so that light that passes through the color filter 20 becomes colored light corresponding to pixels of red, green, and blue. This enables the light emitting layer of the single color to produce desired colors in the same manner as when the white light emitting layer is used.

The transparent electrodes 26 may have the terminal units 35 only on one of the ends in the vertical scanning direction of the liquid crystal 16. In this case, the opposing electrodes 28 closer to the terminal units 35 are controlled to have a smaller on-duty and the opposing electrodes 28 farther from the terminal units 35 are controlled to have a greater on-duty. More specifically, the opposing electrodes 28 having a greater current density are controlled to have a smaller on-duty and the opposing electrodes 28 having a smaller current density are controlled to have a greater on-duty. As a result, the brightness of each linear light emitting region 30 becomes substantially the same, and the unevenness of brightness is reduced. However, the structure of the above embodiment in which the terminal units 35 are arranged on the two ends enables easier control.

When the organic EL element 25 includes the transparent electrode 26 formed by the sheet electrode and the opposing electrodes 28 formed in the shapes corresponding to the linear light emitting regions 30, the terminal units 35 of the transparent electrode 26 may be arranged on the same sides of the substrate 24 on which the terminals 28a are arranged. The terminal unit 35 may be arranged on each of the two sides or on one of the two sides. As shown in Fig. 21(a) for example, the terminal unit 35 of the transparent electrode 26 may be elongated and an insulation film 51 may be arranged on a portion of the terminal unit 35 close to the organic layer 27. The terminal 28a of each opposing electrode 28 is arranged on the insulation film 51. Further, as shown in Fig. 21(b), an electrode extension unit 28b of each opposing electrode 28 may be arranged on the insulation film 51, and the terminal 28a of each opposing electrode 28 may be arranged on the insulation film 51 in a manner that the terminal 28a is electrically connected to the electrode extension unit 28b. As a material for the terminals 28a, a material that is less likely to rust than the material for the opposing electrodes 28 may be used. For example, the same material as the material for the transparent electrode 26 may be used. When the terminal units 35 of the transparent electrodes 26 and the terminals 28a of the opposing electrodes 28 are arranged on the same sides of the substrate 24 and the terminal units 35 and the terminals 28a are connected via flexible printed circuit boards (FPCs), this structure reduces the number of FPCs. This structure reduces the cost, simplifies the packaging operation, and reduces the size of the device.

When the organic EL element 25 includes the opposing electrode 28 formed by the sheet electrode and the transparent electrodes 26 formed in the shapes corresponding to the linear light emitting regions 30, the terminals 28a may be arranged on the same sides of the substrate 24 on which the terminal units 35 are arranged in the same manner as in the above embodiment. The terminal 28a may be arranged on each of the two sides or on one of the two sides.

The liquid crystal panel 12 may be a black and white display panel that does not include the color filter 20. When the liquid crystal panel 12 is for black and white display or for monochrome display, an EL element forming its illumination unit 13 is not limited to the EL element having the light emitting layer 33 that emits white light, and may be an EL element having a light emitting layer that emits light of another color.

The present invention is not limited to the structure in which a reverse bias voltage is applied to the organic EL element 25 when each linear light emitting region 30 is in the non-light emitting state. Both of the first electrode (transparent electrode 26 in the present embodiment) and the second electrode (opposing electrode 28 in the present embodiment) may be formed by a plurality of electrodes having linear shapes corresponding to the linear light emitting regions 30.

When the opposing electrode 28 is formed from a material having a greater volume resistivity than the material for the transparent electrode 26 that is arranged at the side of the liquid crystal panel 12, the transparent electrode 26 is formed by a plurality of electrodes having linear shapes and the opposing electrode 28 is formed by a sheet electrode.

The illumination unit 13 is not be limited to the device of a bottom emission type, but may be a device of a top emission type that emits light from the side opposite to the substrate. In this case, the substrate may be opaque.

The illumination unit 13 may be configured to include an inorganic EL element using an inorganic EL layer instead of the organic layer 27. In this case, unlike when the organic EL element 25 is used, the means for protecting the organic EL element 25 against moisture or oxygen is eliminated.

**Claims**

1. A liquid crystal display device using an illumination unit including a planar light emitting region formed by an EL element as a backlight, wherein:

   the planar light emitting region is formed by a plurality of linear light emitting regions extending in a direction perpendicular to a vertical scanning direction of liquid crystal, the plurality of linear light emitting regions are controlled to switch between a light emitting state and a non-light emitting state by a command signal from a controller in a manner that the plurality of linear light emitting regions sequentially emit light in synchronization with vertical scanning of the liquid crystal, and the linear light emitting regions are controlled to be in the non-light emitting state at least during a drive data rewriting period of a portion of the liquid crystal that is immediately above the linear light emitting region.

2. The liquid crystal display device according to claim 1, wherein when one of the linear light emitting regions is switched from the light emitting state to the non-light emitting state, the one linear light emitting region is switched to the non-light emitting state after another one of the linear light emitting regions is switched to the light emitting state in place of the one linear light emitting region that is switched to the non-light emitting state.

3. The liquid crystal display device according to claim 1 or 2, wherein the EL element has a light emitting layer and a first electrode and second electrodes that are arranged to sandwich the light emitting layer, the first electrode has a greater volume resistivity than the second electrodes and is formed by a sheet electrode shared with all the linear light emitting regions, and the second electrodes are formed to have shapes respectively corresponding to the linear light emitting regions.

4. The liquid crystal display device according to claim 3, wherein the first electrode has a terminal unit on at least one end of the first electrode in the vertical scanning direction of the liquid crystal, and the controller controls the second electrodes in a manner that the second electrodes have a smaller on-duty when located closer to the terminal unit.

5. The liquid crystal display device according to claim 4, wherein the terminal unit is arranged on one or two ends of the first electrode.

**6.** The liquid crystal display device according to claim 4 or 5, wherein each second electrode is pulse width modulation light controlled during an on-period of the second electrode within one frame based on the command from the controller.

**7.** The liquid crystal display device according to claim 1 or 2, wherein the EL element has a light emitting layer and first electrodes and a second electrode that are arranged to sandwich the light emitting layer, the second electrode has a smaller volume resistivity than the first electrodes and is formed by a sheet electrode shared with all the linear light emitting regions, and the first electrodes are formed to have shapes respectively corresponding to the linear light emitting regions.

**8.** The liquid crystal display device according to any one of claims 3 to 7, further comprising:

a liquid crystal panel arranged to face the illumination unit, wherein the first electrode is transparent and arranged closer to the liquid crystal panel than the second electrode.

**9.** The liquid crystal display device according to any one of claims 1 to 8, wherein the EL element is an organic EL element including a light emitting layer that is formed by a thin film of an organic EL material.

**10.** The liquid crystal display device according to claim 9, wherein the organic EL element is switched from a state in which a voltage lower than the voltage necessary for light emission is applied to the organic EL element to a state in which the voltage necessary for light emission is applied to the organic EL element when the organic EL element is controlled to switch from the non-light emitting state to the light emitting state.

**11.** The liquid crystal display device according to claim 9, wherein a voltage higher than the voltage necessary for light emission or a current higher than the current necessary for light emission is applied to the organic EL element when the organic EL element is controlled to switch from the non-light emitting state to the light emitting state.

**12.** The liquid crystal display device according to any one of claims 9 to 11, wherein a reverse bias voltage is applied to the organic EL element in the non-light emitting state.

**13.** The liquid crystal display device according to any one of claims 9 to 12, wherein the organic EL element emits white light, and the liquid crystal panel includes a color filter.

**14.** The liquid crystal display device according to any one of claims 1 to 13, wherein each linear light emitting region is formed to have a width that enables a plurality of lines of pixel electrodes that are sequentially scanned linearly to be simultaneously illuminated.

**15.** The liquid crystal display device according to any one of claims 1 to 14, wherein the linear light emitting regions are controlled in a manner that a plurality of light emitting regions are set in the light emitting state simultaneously in a normal state.

**16.** The liquid crystal display device according to any one of claims 1 to 15, wherein when a single frame time of the liquid crystal display device is represented by Tf, a response time of the liquid crystal is represented by Tr, the number of lines of the linear light emitting regions is represented by N, and the number of lines of the linear light emitting regions that are illuminated simultaneously is represented by n, the values of Tf, Tr, N, and n satisfy the expression:

$$\{(Tf/N)+Tr\}+(Tf/N)*n \leq Tf.$$

# Fig.1 (a)

# Fig.1 (b)

# Fig.1 (c)

# Fig.2

# Fig.3

# Fig.4

# Fig.5

# Fig.6

# Fig.7

# Fig.8

# Fig.9

# Fig.10

# Fig.11

# Fig.12

# Fig.13

No Reverse Bias Voltage

Reverse Bias Voltage

# Fig.14

# Fig.15

No PWM

PWM

# Fig.16(a)

# Fig.16(b)

# Fig.17(a)

# Fig.17(b)

# Fig.18

# Fig.19

# Fig.20

# Fig.21 (a)

# Fig.21 (b)

## INTERNATIONAL SEARCH REPORT

| | International application No. |
|---|---|
| | PCT/JP2005/009254 |

| A. CLASSIFICATION OF SUBJECT MATTER |
|---|
| Int.Cl⁷ G09G3/36, G02F1/133, G09G3/20, 3/34 |

According to International Patent Classification (IPC) or to both national classification and IPC

| B. FIELDS SEARCHED |
|---|
| Minimum documentation searched (classification system followed by classification symbols)<br>Int.Cl⁷ G09G3/36, G02F1/133, G09G3/20, 3/34 |

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2002-296588 A (Victor Company Of Japan, Ltd.),<br>09 October, 2002 (09.10.02),<br>Par. Nos. [0018] to [0042]; Figs. 1 to 3<br>(Family: none) | 1,3,7-9,15<br>10-14,16<br>2,4-6 |
| X | JP 64-82019 A (Citizen Watch Co., Ltd.),<br>28 March, 1989 (28.03.89),<br>Page 2, lower right column, line 11 to page 3,<br>upper right column, line 17; Figs. 1 to 5<br>(Family: none) | 1,14 |
| X | JP 2000-321551 A (Sharp Corp.),<br>24 November, 2000 (24.11.00),<br>Par. Nos. [0025] to [0039], [0054] to [0057];<br>Figs. 1 to 5, 10<br>(Family: none) | 1 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 August, 2005 (02.08.05) | Date of mailing of the international search report<br>16 August, 2005 (16.08.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2005/009254 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-66639 A  (Pioneer Electronic Corp.),<br>03 March, 2000 (03.03.00),<br>Claims 1 to 2; Figs. 1 to 4<br>& US 6714177 B1 | 10 |
| Y | JP 2001-296837 A  (Toray Industries, Inc.),<br>26 October, 2001 (26.10.01),<br>Par. Nos. [0005] to [0011]; Figs. 11 to 12<br>(Family: none) | 11 |
| Y | JP 11-8064 A  (Stanley Electric Co., Ltd.),<br>12 January, 1999 (12.01.99),<br>Par. Nos. [0002] to [0005]; Fig. 2<br>(Family: none) | 12 |
| Y | JP 2002-189451 A  (Fuji Photo Film Co., Ltd.),<br>05 July, 2002 (05.07.02),<br>Par. Nos. [0031] to [0033]; Fig. 5<br>& US 2002/0033791 A1 | 13 |
| Y | WO 2003/032288 A1  (NEC Corp.),<br>17 April, 2003 (17.04.03),<br>Page 14, line 16 to page 17, line 7; Figs.<br>14 to 15<br>& US 2004/0246242 A1 | 16 |
| A | JP 2001-183622 A  (Sharp Corp.),<br>06 July, 2001 (06.07.01),<br>Full text; all drawings<br>& US 2004/0017348 A1 | 1-16 |

Form PCT/ISA/210 (continuation of second sheet) (January 2004)

## INTERNATIONAL SEARCH REPORT

| International application No. |
| --- |
| PCT/JP2005/009254 |

**Box No. II**    **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**    **Observations where unity of invention is lacking (Continuation of item 3 of first sheet)**

This International Searching Authority found multiple inventions in this international application, as follows:
The matter common to the inventions of each of claims 1-2 or 3-8, 9-13, 14, 15, and 16 is to control linear light emission regions so that they are in a non-light-emitting state at least in a time period where drive data of that portion of liquid crystal which is directly above the linear light emission regions are being rewritten.  However, the control above makes no contribution over the prior art because the search has revealed that the control is disclosed in JP 2002-296588 A, JP 2000-321551 A, and JP 64-82019 A.
Therefore, there is no matter common to the inventions of each of claims 1-2 or 3-8, 9-13, 14, 15, and 16.
(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest.

    ☒ No protest accompanied the payment of additional search fees.

Form PCT/ISA/210 (continuation of first sheet (2)) (January 2004)

**INTERNATIONAL SEARCH REPORT**

| International application No. |
|---|
| PCT/JP2005/009254 |

Continuation of Box No.III of continuation of first sheet(2)

As a consequence, it is apparent that the inventions of claims 1-16 do not satisfy the requirement of unity of invention.

Form PCT/ISA/210 (extra sheet) (January 2004)

**EP 1 775 710 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002006766 A